# EUROPÄISCHE PATENTSCHRIFT

(11) **EP 0 396 006 B1**
(45) Veröffentlichungstag und Bekanntmachung des Hinweises auf die Patenterteilung: **16.06.1993**
(21) Anmeldenummer: 90107802.2
(22) Anmeldetag: 25.04.1990
(51) Int. Cl.: B60J 7/08, B60J 10/12, B60R 13/07

(54) **Öffnungsfähiges Fahrzeugdach**
Opening roof for vehicles
Toit ouvrable pour véhicules automobiles

(30) Priorität: 01.05.1989 NL 8901100
(43) Veröffentlichungstag der Anmeldung: 07.11.1990
(73) Patentinhaber: Webasto AG Fahrzeugtechnik, D-82131 Stockdorf (DE)
(72) Erfinder: Haefkens, Bernard Andries, NL-6585 BP Mook (NL); Fürst, Arpad, DE 8034 Germering (DE)

(56) Entgegenhaltungen:
- EP-A- 0 295 814
- GB-A- 2 141 979
- US-A- 3 972 558
- US-A- 4 133 576
- US-A- 4 819 985

## Beschreibung

Die Erfindung betrifft ein öffnungsfähiges Fahrzeugdach mit einem von oben in eine Öffnung der festen Dachhaut eingesetzten Rahmen und einer in diesem Rahmen angeordneten, nach oben offenen Wassersammelrinne, gemäß Oberbegriff von Anspruch 1.

Bei Dächern dieser Gattung, die als Hubdächer oder Dachluken, Spoilerdächer oder Faltdächer ausgebildet sein können, bleibt der Deckel beziehungsweise die Abdeckung (beim Faltdach) in allen möglichen Positionen stets oberhalb der festen Dachhaut.

Die Ableitung des zwischen den Rand des Deckels (bzw der Abdeckung) und den Rand der Öffnung der festen Dachhaut eindringenden Regen- oder Waschwassers erfolgt bei bekannten Dächern über eine unterhalb der festen Dachhaut angeordnete Wassersammelrinne und von dieser ausgehende Ablaufkanäle, die bei der Montage mit innerhalb der Fahrzeugsäulen vorbereitet verlegten Wasserabfuhrleitungen verbunden werden müssen. Sowohl die vorbereitende Verlegung der Wasserabfuhrleitungen als auch deren Verbindung mit den Ablaufkanälen bei der Dachmontage bedeutet einen erheblichen Aufwand.

Der Erfindung liegt die Aufgabe zugrunde, die vorstehend genannten Nachteile zu beseitigen.

Diese Aufgabe wird erfindungsgemäß dadurch gelöst, daß der Boden der Wassersammelrinne ein gegenüber der den Rahmen umgebenden festen Dachhaut zumindestens gleich hohes Niveau aufweist und ein die äußere Begrenzung der Wassersammelrinne bildender Teil des Rahmens wenigstens einen die Wassersammelrinne mit der festen Dachhaut verbindenden Abflußkanal aufweist (kennzeichnender Teil von Anspruch 1).

Durch diese Merkmale wird erreicht, daß Sammlung und Abfuhr des Wassers ausschließlich oberhalb der festen Dachhaut erfolgen. Bei Fahrzeugen, die für eine Ausrüstung mit derartigen Dächern vorgesehen sind, kann auf eine Verlegung von Wasserabfuhrleitungen im Fahrzeuginneren gänzlich verzichtet werden. Auch bei nachträglichem Einbau wird der Montageaufwand erheblich verringert.

Die Bildung einer Wassersammelrinne oberhalb der festen Dachhaut ist zwar von Dachluken für Lastkraftwagen bekannt, jedoch bleibt bei diesen das Wasser in der Sammelrinne stehen, die außenseitig von einer umlaufenden Wand eines Aufsatzrahmens und innenseitig von einer umlaufenden Dichtleiste begrenzt wird, da dort keine Ablaufkanäle vorgesehen sind. Nachteilig bei einer solchen bekannten Dachluke ist, daß das sich in der Sammelrinne ansammelnde Regenwasser beim Öffnen des Deckels nach innen gelangt und die Fahrzeuginsassen bespritzt.

Vorteilhafte Ausgestaltungen der Erfindung sind in den Unteransprüchen enthalten. So ist eine Ausbildung der Abflußkanäle in Form von Bohrungen fertigungstechnisch einfach und für den optischen Gesamteindruck des Daches vorteilhaft.

Eine Ausbildung der Abflußkanäle in Form von nach oben offenen Rinnen ist fertigungstechnisch einfach und bietet durch eine bessere Vermeidung von Verstopfungen derselben optimale Abflußmöglichkeiten.

Vorteilhaft ist es ferner zur Unterstützung der Abflußwirkung, wenn der Boden der Abflußrinne gegenüber der den Rahmen umgebenden festen Dachhaut ein leicht erhöhtes Niveau aufweist und wenn dabei die Abflußkanäle nach außen hin ein leichtes Gefälle aufweisen.

Da die meisten Dächer bedingt durch die heute übliche aerodynamisch günstige Keilform der Fahrzeuge im Bereich der üblichen Anordnung eines öffnungsfähigen Daches einen Anstieg nach hinten aufweisen, ist es vorteilhaft, insbesondere im vorderen Teil, in dem sich das Wasser bedingt durch diese Dachneigung sammelt, in beiden Längsseiten des Rahmens je einen Abflußkanal anzuordnen. Eine Abwinkelung dieser Abflußkanäle nach hinten (in Bezug auf die Fahrzeuglängsachse) bewirkt, daß der vorbeistreichende Fahrtwind die Entleerung der Wassersammelrinne unterstützt.

Zusätzliche Abflußkanäle in einem hinten gelegenen Querteil des Rahmens unterstützen die lokale Drainagewirkung in diesem Bereich insbesondere bei höheren Geschwindigkeiten.

Schließlich ist es insbesondere bei sportlichen Fahrzeugen mit extremer Keilform vorteilhaft, je einen Abflußkanal im vorderen Querteil des Rahmens so anzuordnen, daß diese in der Verlängerung der längsseitig verlaufenden Teile der Wassersammelrinne liegen. Dabei wird das Wasser ausschließlich nach vorn über die Windschutzscheibe abgeleitet, wo es aufgrund der ohnehin vorhandenen Scheibenwischer keine zusätzliche Sichtbeeinträchtigung verursacht.

Nachfolgend sind mehrere Ausführungsbeispiele für Dächer gemäß der Erfindung anhand der Figuren beschrieben. Es zeigt
Fig. 1 eine schematisch perspektivische Ansicht eines der Erfindung entsprechenden Dachlüfters,
Fig. 2 einen vergrößerten Ausschnitt gemäß Pfeil II in Abb. 1,
Fig. 3 einen der Fig. 2 entsprechenden Ausschnitt in alternativer Ausführung,
Fig. 4 eine alternative Ausführung eines Abflußkanals,
Fig. 5 ein weitere Variante mit vorn liegenden Abflußkanälen.

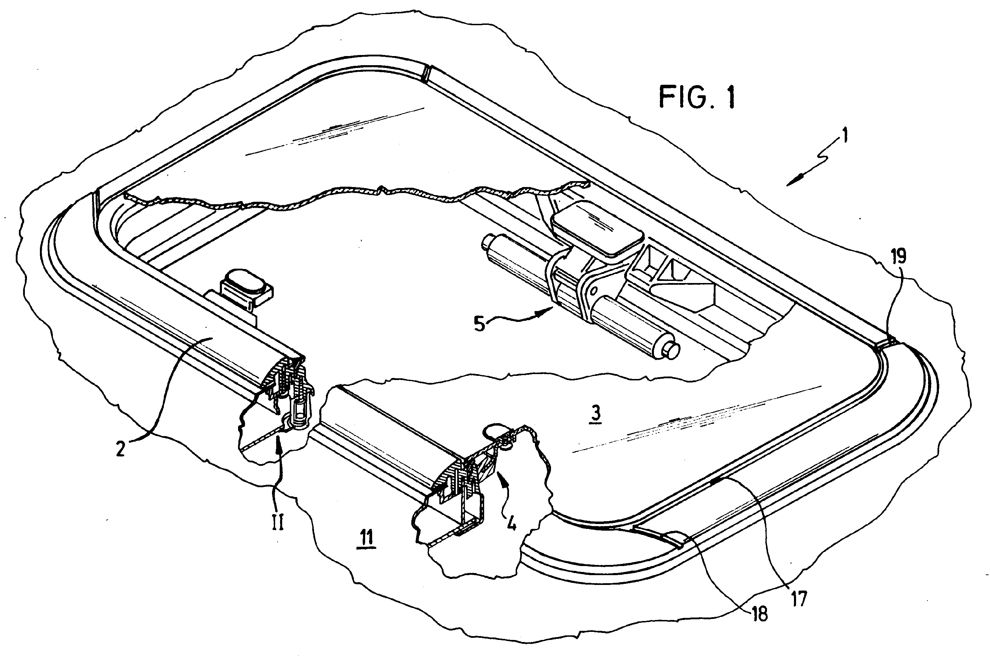

Ein in Fig. 1 gezeigter, insgesamt mit 1 bezeichneter Dachlüfter weist einen Rahmen 2 auf, der in ein nicht näher dargestelltes Fahrzeugdach 11 eingebaut wurde. In einer festen Dachhaut 6 des Fahrzeugdaches 11 wurde eine Öffnung ausgespart, in die ein vertikal nach unten überstehendes Teil des Rahmens 2 paßt. Ein horizontal nach außen überstehender Rand des Rahmens 2 ruht mit einem Dichtungsgummi 9 auf dem Rand der Dachhaut 6. Unter der Dachöffnung ist als unterer Rahmen ein Verschlußprofil 7 angebracht, das mit Hilfe von Schrauben 8 am Rahmen 2 befestigt ist.

Das Verschlußprofil 7 ist im Querschnitt L-förmig. Der obere Rand 10 seines vertikal nach oben weisenden Schenkels befindet sich in montiertem Zustand gegenüber der Dichtung 9 und drückt den Rand der festen Dachhaut 6 gegen die Dichtung 9.

Am vorderen Querteil des Rahmens 2 ist mit zwei Scharnieren 4 ein zum Verschließen der Dachöffnung dienender Glasdeckel 3 befestigt. Am hinteren Querteil des Rahmens 2 ist ein Verschluß 5 angebracht, mittels dem der Glasdeckel 3 mit Hilfe der Scharniere 4 aus dem in Fig. 1 gezeigten geschlossenem Zustand mit seinem hinteren Teil nach oben ausstellbar ist. Darüberhinaus kann der Glasdeckel nach Lösen der Scharniere 4 und des Verschlusses 5 auch vollständig herausgenommen werden.

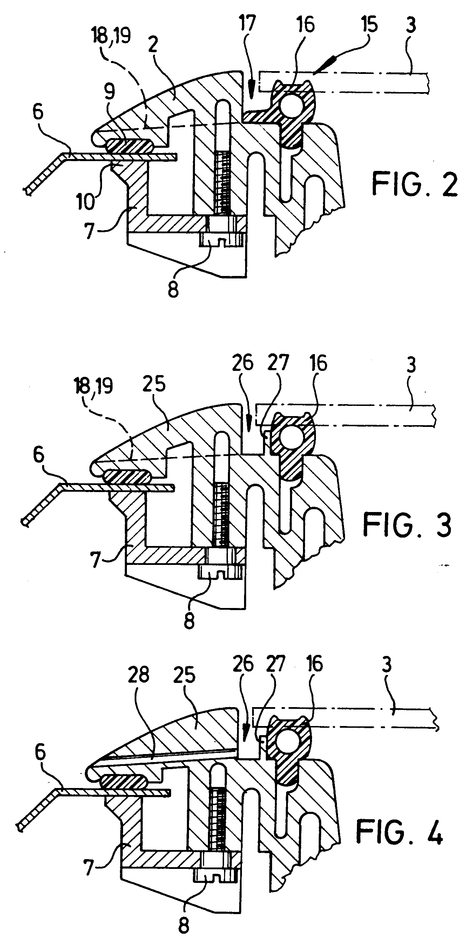

Wie in Fig. 2 gezeigt, bildet der Rahmen 2 einen Falz 15, der den Glasdeckel 3 in geschlossenem Zustand aufnimmt. Im Falz 15 befindet sich eine Dichtleiste 16, auf der der Glasdeckel 3 in geschlossenem Zustand aufliegt. Die Dichtleiste 16 wird vorzugsweise von einem elastischen Dichtungsprofilstreifen gebildet, der durch den Deckel in Schließstellung elastisch verformt wird.

Der Rahmen 2 weist am Falz 15 eine Wassersammelrinne 17 auf. In der Ausführung gemäß Fig. 2 wird die Wassersammelrinne nach innen von der Dichtleiste 16 und nach außen vom erhöhten Rand des Rahmens 2 begrenzt. Auf der festen Dachhaut 6 bzw. auf dem Glasdeckel 3 befindliches Regen- oder Waschwasser wird von der Wassersammelrinne 17 aufgenommen.Der Boden der Wassersammelrinne 17 weist ein Niveau auf, das zumindestens gleich hoch, vorzugsweise jedoch etwas höher ist wie das der umgebenden festen Dachhaut 6.

In der Nähe der vier Ecken des Dachlüfters 1 befindet sich, wie in Fig. 1 dargestellt, jeweils ein Abflußkanal 18, 19. Die Abflußkanäle 18, 19 werden in diesem Ausführungsbeispiel von nach oben offenen Rinnen in der Oberfläche des Rahmens 2 gebildet. Der Boden jedes Abflußkanals 18, 19 schließt jeweils an den Boden der Wassersammelrinne 17 an, sodaß das in letzterer gesammelte Wasser über die Abflußkanäle 18, 19 abfließen kann. In einer bevorzugten Ausführungsform, bei der der Boden der Wassersammelrinne 17 ein über der umgebenden festen Dachhaut 6 liegendes Niveau aufweist, haben die Abflußkanäle 18, 19 ein Gefälle von innen nach außen.

Die seitlich in der Nähe der vorderen Ecken angeordneten Abflußkanäle 18 sind vorzugsweise zusätzlich gegenüber der Fahrzeuglängsachse nach hinten geneigt. Die Abflußkanäle 19 nahe den hinteren Ecken verlaufen in Richtung der Längsachse des Fahrzeugs. Durch diese Lage der Abflußkanäle 18, 19 wird erreicht, daß das sich sammelnde Wasser vom Fahrtwind gut aus der Wassersammelrinne durch die Abflußkanäle nach außen gedrückt wird.

Bei der in Fig. 3 dargestellten Variante ist eine Wassersammelrinne 26 unmittelbar im Profil des Rahmens 25 ausgebildet. Die Wassersammelrinne wird hierbei nicht von einer Dichtleiste, sondern von einem mit dem Rahmen 2 fest verbundenen Rand 27 begrenzt, an den sich innenseitig eine Dichtleiste anschließt.

Durch das Anbringen von Abflußkanälen 18, 19 in der Nähe der vier Ecken des Dachlüfters 1 kann sich nie zuviel Wasser in der Wassersammelrinne 17 sammeln. Sogar wenn das Fahrzeug an einem Hang geparkt wird oder aus anderen Gründen schräg steht, kann das Wasser immer gut aus der Wassersammelrinne 17 abfließen. Die Glasdeckel 3 des Dachlüfters 1 kann also jederzeit geöffnet werden, ohne daß das Risiko besteht, daß dabei Wasser in den Innenraum gelangt.

Bei der in Fig. 4 gezeigten Variante, bei der die Bezugszahlen aller gegenüber der Fig. 3 unveränderten Teile beibehalten wurden, werden die Abflußkanäle durch Bohrungen 28 gebildet, von denen in der gewählten Schnittdarstellung nur eine gezeigt ist. Vorzugsweise sind am Umfang des Rahmens 25 in der Nähe der Ecken (analog zur Position der Durchbrüche 18, 19 in Fig.1) insgesamt vier Bohrungen 28 vorgesehen.

Die Bohrungen 28 weisen vorzugsweise von innen nach außen ein Gefälle auf, wodurch die Entlerung der Wassersammelrinne 26 unterstützt wird.

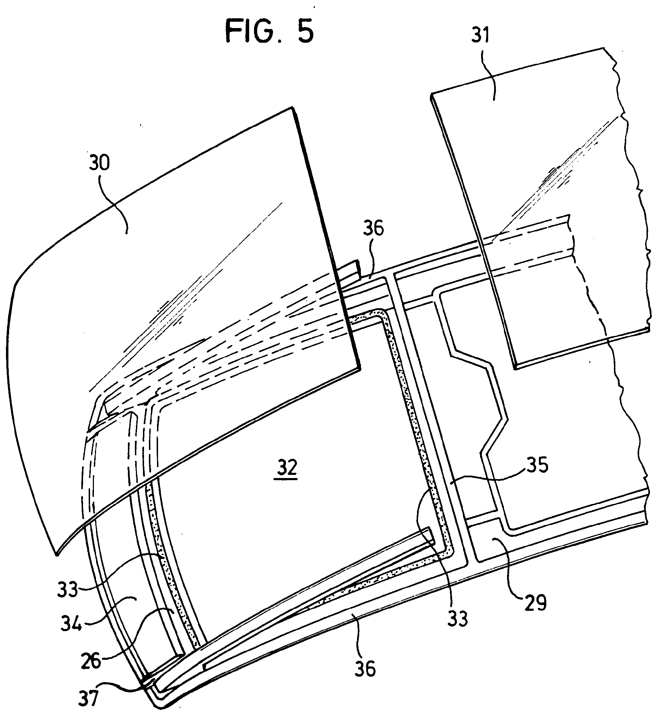

In Fig. 5 ist ein Aufsatzdach für den Einbau in ein Fahrzeug gezeigt, dessen Rahmen 29 zur Aufnahme verschiedener Abdeckungen dient. Als Abdeckung ist für den vorderen Teil des Daches ein erster Glasdeckel 30 vorgesehen, der von oben her aufsetzbar und abnehmbar ist. Zur Abdeckung des hinteren Teils des Daches ist ein zweiter Glasdeckel 31 vorgesehen, der ebenfalls von oben her aufsetzbar und abnehmbar ist. Beide Deckel können in bekannter Weise als Ausstelldächer ausgeführt sein. Sie sind in diesem Fall analog zur Fig.1 im vorderen Teil mit Scharnieren (dort 4) und im hinteren Teil mit einer Arretierungs- und Ausstellvorrichtung (dort 5) am Rahmen befestigt, welche in Fig.5 nicht dargestellt sind.

Es kann jedoch ebensogut wenigstens einer der beiden Deckel in bekannter Weise als Spoilerdeckel ausgebildet sein, der mit seiner Unterseite an einer nicht dargestellten Ausstell- und Verschiebemechanik befestigt ist, welche ihrerseits mittels einer nicht dargestellten, am Rahmen befestigten Antriebsmechanik in gleichfalls am Rahmen vorgesehenen Führungen verfahrbar ist.

Als dritte Variante zur Fig. 5 kann wenigstens einer der Deckel 30, 31 durch ein Faltdach ersetzt werden, dessen Antriebs- und Führungsmittel ebenfalls am Rahmen 29 angeordnet sind.

In jedem der vorstehend genannten Fälle ist die von der Abdeckung zu verschließende Dachöffnung 32 (im folgenden soll nur die vordere der beiden Öfffnungen betrachtet werden) an ihrem Rand von einer inneren Dichtleiste 33 umgeben, die vorzugsweise zumindestens in ihrem oberen Teil elastisch ausgebildet ist und auf der die Abdeckung bei geschlossenen Dach aufliegt.

Die Dichtleiste 33 ist von einer Wassersammelrinne 26 umgeben, deren Boden wie bei den vorstehend beschriebenen Varianten zumindest ein gleich hohes, vorzugsweise jedoch ein höheres Niveau aufweist, wie die den Rahmen 29 umgebende feste Dachhaut. Nach außen hin wird die Wassersammelrinne 26 seitlich von Längsteilen 36, nach hinten von einem Querteil 35 und nach vorn von einem Querteil 34 des Rahmens 29 begrenzt.

Das vordere Querteil 34 weist seitlich außen in Verlängerung der längsseitig verlaufenden Teile der Wassersammelrinne 17 je einen Abflußkanal 37 auf, der in Form einer nach oben offenen Rinne ausgebildet ist. Bei dieser Ausführungsform, die vor allem für Fahrzeuge mit nach hinten stetig steigender Dachkontur geeignet ist, fließt das in der Wassersammelrinne 26 gesammelte Wasser ausschließlich über die Abflußkanäle 37 nach vorn über die nicht dargestellte Windschutzscheibe ab.

Durch die Erfindung wird für alle Typen von öffnungsfähigen Dächern mit einem oberhalb der festen Dachhaut angeordneten Rahmenteil und einer stets oberhalb der festen Dachhaut befindlichen Abdeckung eine kostengünstige Möglichkeit der Wasserabfuhr geschaffen.

## Patentansprüche

1. Öffnungsfähiges Fahrzeugdach mit einem von oben in eine Öffnung (32) der festen Dachhaut (6) eingesetzten Rahmen (2, 25, 29) und einer in diesem Rahmen (2, 25, 29) angeordneten, nach oben offenen Wassersammelrinne (17, 26), dadurch gekennzeichnet, daß der Boden der Wassersammelrinne (17, 26) ein gegenüber der den Rahmen (2, 25, 29) umgebenden festen Dachhaut (6) zumindestens gleich hohes Niveau aufweist und ein die äußere Begrenzung der Wassersammelrinne (17, 26) bildender Teil des Rahmens (2, 25, 29) wenigstens einen die Wassersammelrinne (17,26) mit der umgebenden Dachhaut (6) verbindenden Abflußkanal (18, 19, 28, 37) aufweist.

2. Öffnungsfähiges Fahrzeugdach gemäß Anspruch 1, dadurch gekennzeichnet, daß die Abflußkanäle als Bohrungen (28) ausgebildet sind.

3. Öffnungsfähiges Fahrzeugdach gemäß Anspruch 1, dadurch gekennzeichnet, daß die Abflußkanäle als nach oben offene Rinnen (18, 19, 37) ausgebildet sind.

4. Öffnungsfähiges Fahrzeugdach gemäß Anspruch 1, dadurch gekennzeichnet, daß der Boden der Wassersammelrinne (17, 26) ein gegenüber der den Rahmen (2, 25, 29) umgebenden festen Dachhaut (6) erhöhtes Niveau aufweist

5. Öffnungsfähiges Fahrzeugdach gemäß Anspruch 4, dadurch gekennzeichnet, daß die Abflußkanäle (18, 19, 28, 37) nach außen hin ein Gefälle aufweisen.

6. Öffnungsfähiges Fahrzeugdach gemäß einem der vorhergehenden Ansprüche, dadurch gekennzeichnet, daß in beiden Längsseiten des Rahmens (2) im vorderen Teil je ein Abflußkanal (18) angeordnet ist.

7. Öffnungsfähiges Fahrzeugdach gemäß Anspruch 6, dadurch gekennzeichnet, daß die Abflußkanäle (18) in Bezug auf die Fahrzeuglängsachse von innen nach außen betrachtet nach hinten abgewinkelt sind.

8. Öffnungsfähiges Fahrzeugdach gemäß einem der vorhergehenden Ansprüche, dadurch gekennzeichnet, daß ein in Fahrtrichtung des Fahrzeuges hinten gelegenes Querteil des Rahmens (2) Abflußkanäle (19) aufweist.

9. Öffnungsfähiges Fahrzeugdach gemäß einem der vorhergehenden Ansprüche, dadurch gekennzeichnet, daß ein in Fahrtrichtung des Fahrzeuges vorn gelegenes Querteil (34) des Rahmens (29) zu beiden Seiten in Verlängerung der längsseitig verlaufenden Teile der Wassersammelrinne (26) je einen Abflußkanal (37) aufweist. (Fig. 5)

10. Öffnungsfähiges Fahrzeugdach gemäß einem der vorhergehenden Ansprüche, dadurch gekennzeichnet, daß die Wassersammelrinne (17) innenseitig von einer am Rahmen (2, 25, 29) angeordneten Dichtleiste (16, 27, 33) begrenzt wird.

11. Öffnungsfähiges Fahrzeugdach gemäß Anspruch 10, dadurch gekennzeichnet, daß die Dichtleiste von einem elastischen Dichtungsprofilstreifen (16) gebildet wird.

## Claims

1. An openable vehicle roof with a frame (2, 25, 29) inserted from above into an aperture (32) in the fixed roof skin (6) and with, disposed in this frame (2, 25, 29), an upwardly open water collecting gutter (17, 26), characterised in that the bottom of the water collecting gutter (17, 26) is at a height which is at least equal to that of the fixed roof skin (6) surrounding the frame (2, 25, 29), and in that a part of the frame (2, 25, 29) which forms the outer boundary of the water gutter (17, 26) comprises at least one run-off channel (18, 19, 28, 37) connecting the water gutter (17, 26) to the fixed roof skin (6).

2. An openable vehicle roof according to claim 1, characterised in that the run-off channels are constructed as bores (28).

3. An openable vehicle roof according to claim 1, characterised in that the run-off channels are constructed as upwardly open gutters (18, 19, 37).

4. An openable vehicle roof according to claim 1, characterised in that the bottom of the water collecting gutter (17, 26) is at a height which is higher than that of the fixed roof skin (6) surrounding the frame (2, 25, 29).

5. An openable vehicle roof according to claim 4, characterised in that the run-off channels (18, 19, 28, 37) have an outwardly downward slope.

6. An openable vehicle roof according to one of the preceding claims, characterised in that a run-off channel (18) is disposed in each of the front parts of the two longitudinal sides of the frame (2).

7. An openable vehicle roof according to claim 6, characterised in that when viewed from the inside outwardly the run-off channels (18) are angled rearwardly in relation to the longitudinal axis of the vehicle.

8. An openable vehicle roof according to one of the preceding claims, characterised in that a transverse part of the frame (2) which is situated at the rear in the direction of travel of the vehicle comprises run-off channels (19).

9. An openable vehicle roof according to one of the preceding claims, characterised in that a transverse part (34) of the frame (29) which is at the front in the direction of travel of the vehicle has on both sides run-off passages (37) which are an extension of those parts of the water collecting gutter (26) which extend on the longitudinal side (Fig. 5).

10. An openable vehicle roof according to one of the preceding claims, characterised in that the water collecting gutter (17) is bounded on the inside by a sealing strip (16, 27, 33) disposed on the frame (2, 25, 29).

11. An openable vehicle roof according to claim 10, characterised in that the sealing strip is constituted by a resilient profiled sealing strip (16).

## Revendications

1. Toit ouvrable pour véhicule automobile, comportant un cadre (2, 25, 29) monté par le haut dans l'ouverture (32) du toit rigide (6) et équipé d'une rigole collectrice de l'eau (17, 26), ouverte vers le haut, caractérisé en ce que le fond de la rigole collectrice (17, 26) est au moins au niveau du toit rigide (6) entourant le cadre (2, 25, 29), dont une partie constituant la limite externe de la rigole collectrice (17, 26) est équipée d'au moins un canal d'évacuation (18, 19, 28, 37) reliant la rigole collectrice (17, 26) au toit rigide (6) qui l'entoure.

2. Toit ouvrable selon la revendication 1, caractérisé en ce que les canaux d'évacuation sont constitués par des perçages (28).

3. Toit ouvrable selon la revendication 1, caractérisé en ce que les canaux d'évacuation sont constitués par des saignées (18, 19, 37) ouvertes vers le haut.

4. Toit ouvrable selon la revendication 1, caractérisé en ce que le fond de la rigole collectrice (17, 26) est situé à un niveau plus haut que le toit rigide (6) entourant le cadre (2, 25, 29).

5. Toit ouvrable selon la revendication 4, caractérisé en ce que les canaux d'évacuation (18, 19, 28, 37) sont en pente vers l'extérieur.

6. Toit ouvrable selon une des revendications précédentes, caractérisé en ce qu'un canal d'évacuation (18) est disposé à la partie avant de chacun des bords longitudinaux du cadre (2).

7. Toit ouvrable selon la revendication 6, caractérisé en ce que les canaux d'évacuation (18) sont coudés vers l'intérieur par rapport à l'axe longitudinal du véhicule vu de l'intérieur vers l'extérieur.

8. Toit ouvrable selon l'une des revendications précédentes, caractérisé en ce qu'une partie transversale du châssis (2) située à l'arrière en direction de la marche du véhicule présente un canal d'évacuation (19).

9. Toit ouvrable selon l'une des revendications précédentes, caractérisé en ce qu'une partie transversale (34) du châssis (29) située vers l'avant en direction de la marche du véhicule présente chaque fois un canal d'évacuation (37) aux deux cotés en prolongement de la partie s'étendant du côté longitudinal de la rigole collectrice (26) (figure 5).

10. Toit ouvrable selon l'une quelconque des revendications précédentes, caractérisé en ce que la rigole collectrice (17) est limitée côté intérieur à un liteau d'étanchéité (16, 27, 33) disposé sur le châssis (2, 25, 29).

11. Toit ouvrable selon la revendication 10, caractérisé en ce que sur le liteau d'étanchéité est formé d'un profil d'étanchéité (16) élastique.
